# EUROPEAN PATENT APPLICATION

(11) **EP 3 441 923 A1**
(43) Date of publication of application: **13.02.2019**
(21) Application number: 17205023.9
(22) Date of filing: 01.12.2017
(51) Int. Cl.: G06Q 20/32

(54) **FACILITATING A LOCATION-SPECIFIC TRANSACTION**

(71) Applicant: Barclays Bank Plc., London, Greater London E14 5HP (GB)
(72) Inventor: SHEIKH, Usman, London E14 5HP (GB)
(74) Representative: Boult Wade Tennant LLP

(57) **Abstract**

A location-specific transaction is facilitated using an electronic system, comprising: a server; and an interaction device. A location identification code is communicated from a short-range communications interface of the interaction device to a user's portable electronic communications device proximate to the location, which communicates it to the server. The server then identifies a location identifier corresponding with the location identification code to the communications device, so that the communications device can send the location identifier to an electronic transaction management system, in order to manage the transaction being effected at the location. Upon a completion of the transaction, the server receives an electronic signal indicating the completion and then communicates a completion instruction to the interaction device, using a separate long-range communications interface of the interaction device. In response to receiving the completion instruction, the interaction device activates a visual indicator to indicate the completion.

## Description

### Technical Field of the Disclosure

The disclosure relates to a method for facilitating a location-specific transaction using an electronic system and to a corresponding electronic system comprising: a server; and an interaction device positioned at a location separate from the server.

### Background to the Invention

There are a wide variety of existing electronic systems for facilitating transactions, in which a user effects a payment in order to make a purchase. A restaurant scenario has previously been considered as potentially benefitting from such systems. In particular, systems for making orders from a restaurant have been described, such as US patent number 8,452,667. Other, similar commercial systems have been made available to the public. Such systems typically provide direct interaction between a portable electronic device of the user (such as a smartphone) and the point-of-sale (POS) system of the vendor (in this example, the restaurant).

In the restaurant scenario, the location for receiving the order (for example, a specific table in a particular restaurant) is a key piece of information in the transaction. US Patent publication number 2013/232017 and US Patent number 9,633,344 suggest an operator server can transmit a unique time-sensitive and location-based code to a user's smartphone. The vendor personnel, such as a waiter, are provided with the code and use it to create an ad-hoc association between the smartphone and the user's purchase tab. The user then utilizes the smartphone to autonomously close the purchase tab and perform remote electronic payment, without requiring involvement from the vendor personnel. However, this approach is far from automatic and the user interaction with the system is complicated.

An alternative approach is discussed in Korean Patent publication number 2017-0104793. This discusses fixing a Near Field Communication (NFC) tag to a table, for instance in a restaurant. A user's portable device communicates with the NFC tag, to receive the data required for settling their order, specifically: URL information for communicating with the restaurant payment server; information about the restaurant; and table location information, that can be communicated to the restaurant payment server for making an order or payment without downloading an application. Such a system does not require a server separate from the restaurant's POS system. However, this approach is inflexible, for example if the table location changes. Moreover, the transaction is facilitated only be the interaction between the user's portable device and the restaurant's POS system. This creates potential insecurity in the system and introduces a vulnerability to abuse.

An improved electronic system for facilitating a location-specific transaction is therefore desirable. This would remedy the deficiencies of existing approaches and provide an improved user interaction with the system.

### Summary of the Invention

Against this background, there is provided a method for facilitating a location-specific transaction using an electronic system in accordance with claim 1 and an electronic system for facilitating a location-specific transaction in line with claim 15. Further optional, preferable and advantageous features are detailed in the following description and in the dependent claims.

The disclosure provides an electronic system with two parts: a server; and at least one interaction device (referred to as a "totem" within parts of the present disclosure) advantageously positioned at a location separate from the server. Typically, the interaction device is located where the transaction takes place, for example on, under or in a table of a restaurant, at which the user is making an order. Although the preferred scenario of a restaurant transaction is used within this disclosure (and there are particular advantages of the system in such scenarios, it will be appreciated that the system can be used for any location-specific transaction. Typically, the system comprises a plurality of interaction devices, each of which is advantageously positioned at a different location (for example, at a different table and/or in a different restaurant).

The interaction device has two electronic communication interfaces: a short-range communications interface of the interaction device, particularly configured to communicate no more than 1.5 metres, 1 metre or 0.5 metres from the interaction device. This may use Bluetooth™, Bluetooth Low Energy (BLE) and/or Near Field Communications (NFC). Using this short-range communications interface, the interaction device provides a user's portable electronic communications device (such as a smartphone, tablet, laptop computer or similar device) with a code identifying the location. The interaction device may broadcast the code at regular intervals, or may transmit the code only when triggered to do so by receipt of a trigger message from the user's portable electronic communications device.

The user's portable electronic communications device then communicates with the server of the electronic system to translate the code identifying the location into a location identifier. The location identifier typically identifies the location in a way that may be understood by the user and/or by an electronic transaction management system (for instance a point of sale system or a server coupled to the point of sale system). In a restaurant scenario, this may identify the name and/or location of the restaurant and the table number at which the user is located. By allowing the code identifying the location to be translated into a location identifier via the server, reconfiguration of the interaction devices' locations (by changing the mapping between the code identifying the location and the location identifier) is made straightforward and efficient.

The user's portable electronic communications device can then use the location identifier received from the server to interface with the electronic transaction management system. This interaction can also include communicating a unique identifier for the user from the user's portable electronic communications device to the electronic transaction management system, so that the electronic transaction management system can identify the user (as well as the user's location and thus, the transaction being effected at that location). This allows management of the transaction (for instance, making an order, viewing an order, amending an order, requesting payment for all or part of an order and/or splitting the bill for an order).

Once the user's portable electronic communications device has successfully interfaced with the electronic transaction management system, this can be communicated to the server of the electronic system (either directly from the electronic transaction management system or via the user's portable electronic communications device). The server can then instruct the interaction device at the location to activate a visual indicator (for example, a light). This can provide an independent verification that the user is correctly registered with the electronic transaction management system for the location of the transaction.

Preferably, the user can make a request for payment to complete the transaction from their portable electronic communications device. The request is communicated from the portable electronic communications device to the electronic transaction management system, which then effects the payment and completes the transaction. It may be possible for completion of the transaction to be dependent on other factors, for example a cash payment (for example, for part of the bill) directly to the vendor's personnel or a payment by another user via the electronic transaction management system).

When the transaction is completed, this is communicated to the server of the electronic system (again, either directly from the electronic transaction management system or via the user's portable electronic communications device). The server may then instruct the interaction device at the location to activate a visual indicator, which may be the same visual indicator as used previously (if that is used at all) or a different indicator. For example, the colour and/or duration of a light can be different for the two indications. This indication can provide a clear and independent verification that the transaction has been completed. Such a verification can be a useful, timely and proactive indication for the user (giving them the confidence to leave the location without concerns that the transaction is still in progress), the vendor's personnel (who may be concerned if they believe that the transaction is still in progress) and the general public (wishing to obtain access to the location to start their own transaction, for instance).

In particular, the use of the interaction device as part of the electronic system provides benefits both in: providing an independent, secure and easy-to-use way to identify the location to the user, the server and the electronic transaction management system; and indicating directly and proactively to the user and all other interested parties that the transaction has completed. This approach improves the user's interaction with the system, provides flexibility in configuring the system and at the same time, makes the transaction proceed more quickly and accurately.

### Brief Description of the Drawings

The invention may be put into practice in a number of ways and a preferred embodiment will now be described by way of example only and with reference to the accompanying drawings, in which:
Figure 1 shows a schematic diagram of an electronic system in accordance with the disclosure, in an exemplary environment;
Figure 2 schematically depicts an embodiment of an interaction device ("totem") from an electronic system in line with the disclosure;
Figure 3 illustrates a flowchart of an example method for using an electronic system in accordance with the disclosure;
Figure 4 shows flows of information between parts of an electronic system in accordance with the disclosure and ancillary parts, for account creation;
Figure 5 shows flows of information between parts ancillary to an electronic system in accordance with the disclosure, for account configuration;
Figure 6 shows flows of information between parts of an electronic system in accordance with the disclosure and ancillary parts, for account login;
Figure 7 shows flows of information between parts of an electronic system in accordance with the disclosure and ancillary parts, for registering a transaction at a location;
Figure 8 shows flows of information between parts of an electronic system in accordance with the disclosure and ancillary parts, for completing a transaction at the location; and
Figure 9 shows flows of information between parts ancillary to an electronic system in accordance with the disclosure, for account recovery.

### Detailed Description of a Preferred Embodiment

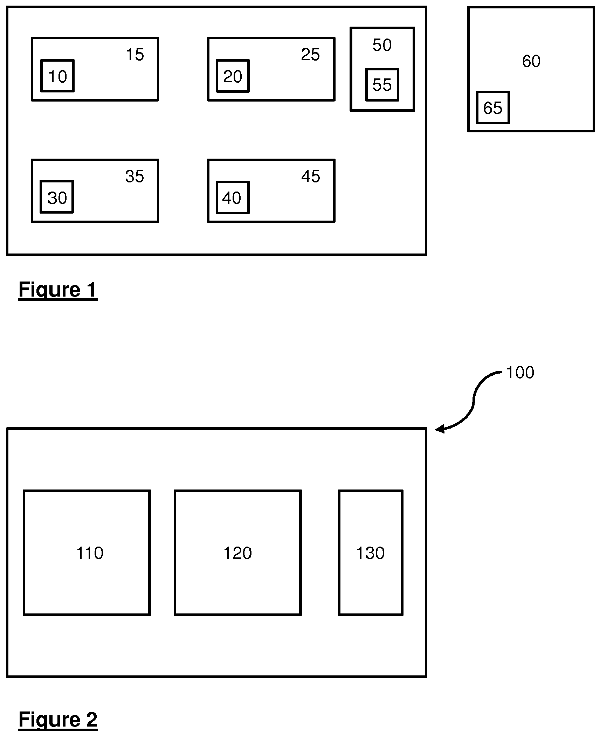

Referring first to Figure 1, there is shown a schematic diagram of an electronic system in accordance with the disclosure. This is in an exemplary environment of a restaurant having a plurality of tables 15, 25, 35 and 45. A first table 15 has a first interaction device 10 provided on the table, a second table 25 has a second interaction device 20 provided on the table, a third table 35 has a third interaction device 30 provided on the table and a fourth table 45 has a fourth interaction device 40 provided on the table. In the restaurant is also provided a point of sale system 50, having a communications interface 55 (for example, to the Internet, telephone system or another long-range communications network). In another location (generally away from the restaurant), there is provided a server 60 with a communications interface 65 (again to the Internet, telephone system or another long-range communications network, for instance).

The electronic system of the disclosure comprises: each of the first interaction device 10, second interaction device 20, third interaction device 30 and fourth interaction device 40; and the server 60. It will be recognised that the number of tables (and therefore the number of interaction devices, assuming that each table has a single interaction device) can be varied in indeed a single server 60 can be used for multiple restaurants, each having a comparable configuration to that shown in Figure 1.

Each of the interaction devices is also referred to as a "totem" in the present disclosure. It is physical device, comprising electronic hardware as will be described below, and position on top of the table. The form factor and size of the interaction device may be varied. In some embodiments, it may be a device separate from the table, but alternatively may be built into the table or positioned within or under the table.

With reference to Figure 2, a schematically depiction an embodiment of an interaction device ("totem") from the electronic system in line with the disclosure is provided. The totem 100 comprises: a first, short-range electronic communications interface 110 (such as a Bluetooth™ Low Energy interface); a second, long-range electronic communications interface 120 (such as a Wireless LAN interface); and a visual indicator 130. The visual indicator 130 is generally a light (for example, provided by a Light Emitting Diode) and can typically emit light of more than one colour (for example, green, red, blue and/or white). Also provided in the totem 100, but not shown, is a controller. This may comprise a microprocessor, programmable or programmed logic or similar technology, with software or firmware on board. The controller is responsible for the actions of the totem 100, as described below. The totem 100 may further comprise a battery (not shown) as a power source for its electronic parts. The battery is preferably rechargeable and a charging circuit (not shown) may also be provided.

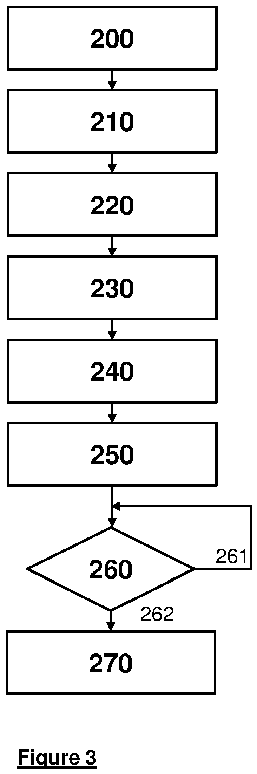

Now referring to Figure 3, there is illustrated a flowchart of an example method for using an electronic system in accordance with the disclosure. This flowchart provides a general overview of the system operations. More details regarding the specific interactions in an exemplary embodiment will then be provided subsequently below.

In a first communication step 200, the short-range communications interface 110 of the totem 100 is used to transmit (for example, broadcast such as by a beacon or prompted by NFC energisation) a location identification code to a portable electronic communications device (such as a smartphone, tablet or laptop) of a user proximate to the location. The location identification code is a code unique to that totem 100 (for example, hard-coded into the totem hardware and/or software), such that each totem transmits a different location identification code in step 200. The portable electronic communications device of the user then, in response to receiving the location identification code from the totem, transmits in second communication step 210, the location identification code from the to the server 60 of the electronic system (via its communications interface 65, typically over the Internet). The server 60 looks up the received location identification code in a local database to find a location identifier corresponding with (associated with or matching) the location identification code. In third communication step 220, the server 60 sends the location identifier to the portable electronic communications device of the user. The location identifier typically provides information about the location, such as one or more of: a name of the restaurant; a location (for example, city, district or address) of the restaurant; and a table number or position.

The location identifier is then sent by the portable electronic communications device of the user in fourth communications step 230 to an electronic transaction management system, which is either the point of sale system 50 or (more preferably) a server linked to the point of sale system 50, in order to manage the transaction being effected at the location. This will normally be effected using an API of the electronic transaction management system. This does not require the electronic system of the disclosure and indeed, may use other technology not forming part of the present disclosure (but readily available to the skilled person, for example as discussed in the background section of the present disclosure).

At this stage and in optional fifth communications step 240, the server 60 is provided with an indication that the electronic transaction management system has identified the transaction. In response to this, the server 60 sends an instruction to the totem 100 (using its long-range communications interface 120) to activate its visual indicator 130, in sixth communications step 250. The visual indicator 130 at the totem 100 is then activated in a first colour and for a first duration. These steps may be omitted in some implementations.

In decision step 260, the server 60 waits for completion of the transaction. Completion of the transaction is identified by receipt of an indicator (an electronic signal) at the server (from the electronic transaction management system and/or from the portable electronic communications device of the user). If the transaction has not yet completed, path 261 is taken and no further action is taken by the server 60 at that point. Once the server 60 receives an indication (the electronic signal) that the transaction has completed (in other words, that the user has paid for the order made at the location), path 262 is taken.

In final communications step 270, the server 60 communicates a completion instruction to the totem 100 using its long-range communications interface 120. The completion instruction is normally sent securely to avoid its spoofing (mimicking). This instructs the totem 100 to activate the visual indicator 130, to indicate the completion of the transaction. The visual indicator 130 at the totem 100 is then activated in a second colour and for a second duration (typically different from the first colour and/or first duration, in cases where steps 240 and 250 are not omitted). The transaction is then completed and the process can start again from step 200 (typically for a new user).

A generalisation of the specific system described above will now be presented. In such general terms, there may be considered a method for facilitating a location-specific transaction using an electronic system. The electronic system comprises: a server; and an interaction device advantageously positioned at a location separate from the server. The method comprises: communicating a location identification code from a short-range communications interface of the interaction device to a portable electronic communications device of a user proximate to the location; in response to receiving the location identification code from the interaction device, communicating the location identification code from the portable electronic communications device of the user to the server of the electronic system; identifying a location identifier corresponding with the location identification code from the server to the portable electronic communications device of the user, so that the portable electronic communications device of the user can send the location identifier to an electronic transaction management system, in order to manage the transaction being effected at the location; receiving at the server, upon a completion of the transaction, an electronic signal indicating the completion and in response to receiving the signal, communicating a completion instruction from the server to the interaction device, using a long-range communications interface of the interaction device that is separate from the short-range communications interface; and in response to receiving the completion instruction, activating a visual indicator at the interaction device, to indicate the completion of the transaction.

In another, related aspect, there is provided an electronic system for facilitating a location-specific transaction, comprising: an interaction device, positioned at a location and comprising: a short-range communications interface, configured to communicate a location identification code to a portable electronic communications device of a user proximate to the location; a long-range communications interface that is separate from the short-range communications interface; and a visual indicator; and a server, advantageously separate from the interaction device and configured to: receive the location identification code from the portable electronic communications device of the user; identify a location identifier corresponding with the location identification code to the portable electronic communications device of the user, so that the portable electronic communications device of the user can send the location identifier to an electronic transaction management system, in order to manage the transaction being effected at the location; and receive, upon a completion of the transaction, an electronic signal indicating the completion and in response to receiving the signal, communicate a completion instruction from the server to the interaction device, using the long-range communications interface of the interaction device. The interaction device is further configured to, in response to receiving the completion instruction, activate the visual indicator, to indicate the completion of the transaction. The interaction device may further comprise a processor configured to control the interaction device to carry out the specified functionality. The electronic system (or parts thereof) may further be configured to operate in accordance with any method as herein described. In alternative aspects, an interaction device and/or server may be provided, as herein described.

These aspects advantageously allow improved interaction between a portable electronic communications device of a user and an electronic transaction management system, for facilitating a location-specific transaction. An example of such a transaction is an order at a restaurant, cafeteria or bar, in which the user wishes to receive their order at a specific location (the table at which the user is sat, for instance). In this case, the system and particularly the interaction device provides location identification that is secure (since it communicates only with a specific server of the system, independent (of both the user's portable electronic communications device and the electronic transaction management system and therefore trusted by all parties) and flexible (since the identification of the location need not be dependent on only the information stored in the interaction device, but can be set or reconfigured using the server). At the same time, the interaction device also provides information about the transaction that is proactive (since it is not necessarily triggered directly by a user action), secure and independent (for the same reasons as noted above) and visible more widely than would be possible using other parts of the system (and therefore able to provide an indication not only to parties involved with the transaction, but also third parties). In this way, flexibility, accuracy, security and efficiency of the electronically-managed transaction are synergistically improved.

Further optional, preferable and/or advantageous features applicable to all generalised aspects will now be discussed and their benefits identified.

The proximity of the user to the location is beneficially sufficient to allow the user's portable electronic communications device to communicate (at least receive from if not also transmit to) the short-range communications interface of the interaction device. The short-range communications interface of the interaction device is typically limited to communication over a (significantly) shorter range than the long-range communications interface of the interaction device. The short-range communications interface of the interaction device is configured to communicate preferably no more than 1.5 metres, more preferably 1 metre or most preferably 0.5 metres from the interaction device. This may allow the interaction device to provide the location identification code in a way that is specific to the location and prevent the user's portable electronic communications device from receiving a location identification code for a location other than the location at which the user is present. For example, the short-range communications interface may comprise one of: a Bluetooth Low Energy (BLE) interface; and a Near Field Communications (NFC) interface. In contrast, the long-range communications interface may be configured for communication at least over the area of a room (at least 1.5 metres and more preferably at least 5 or 10 metres) and is preferably an Internet or telephone system interface, for example comprising one of: a wireless local area network interface; and telephone system interface; and a cellular network interface.

The location identification code is preferably unique to the interaction device. However, the location identifier may be specific to the electronic transaction management system. Although it is preferred that each location identification code is associated with only a single location identifier, such an association being preferably stored at the server of the electronic system (or a database to which the server of the electronic system has access), the association may be set and/or changed dynamically, regularly or in an ad hoc way. Therefore, the method may further comprise configuring the server with the location identifier that corresponds with the location identification code communicated by the interaction device. This step is preferably effected using a communications device remote from the server, for example a communications device associated with a user of the electronic transaction management system.

In the preferred embodiment, the visual indicator comprises a light. The visual indicator may be activated for a predetermined time duration (for instance, at least 2 minutes and/or no more than 5 or 10 minutes).

Preferably, the method further comprises receiving at the server, an electronic indication that the electronic transaction management system has registered the portable electronic communications device of the user at the location. Then, in response to receiving the electronic indication, the method may further comprise communicating a registration instruction from the server to the interaction device, using a long-range communications interface of the interaction device. Beneficially, the method may then comprise, in response to receiving the registration instruction, activating a visual indicator at the interaction device, to indicate the registration. The visual indicator may indicate the registration using a light of a first colour and indicate the completion of the transaction using a light of a second, different colour. Additionally or alternatively, the visual indicator may indicates the registration using a light activated for a first duration and indicates the completion of the transaction using a light activated for a second, different duration (for example, longer than the first duration).

In preferred embodiments, the method may further comprise sending a registration request from the portable electronic communications device of the user to the electronic transaction management system. The registration request may indicate the location identifier and a unique identifier for the portable electronic communications device of the user.

In some embodiments, the method may further comprise (in a step prior to any steps discussed above): registering the portable electronic communications device of the user with the server of the electronic system, to provide a unique identifier for the portable electronic communications device of the user. The unique identifier for the portable electronic communications device of the user may be used in the step of sending a registration request, for instance.

Preferably, the method further comprises communicating an indication from the portable electronic communications device of the user to the electronic transaction management system to effect completion of the transaction. For example, the user of the portable electronic communications device may send an instruction to pay for an order identified by the electronic transaction management system.

In a typical embodiment, the system comprises a plurality of interaction devices, each interaction device being positioned at a different location. Each interaction device may then comprise: a respective short-range communications interface configured for communicating a respective, unique location identification code; a respective long-range communications interface; and a respective visual indicator, configured to be activated in response to an instruction received from the server via the long-range communications interface.

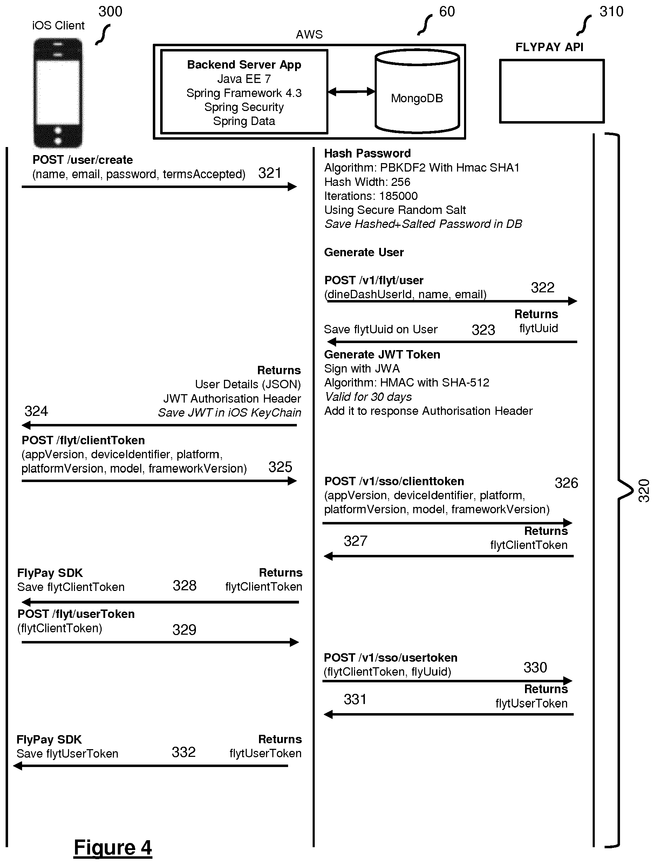

More details about the flow of information between parts of the electronic system and/or ancillary parts will now be discussed, for an exemplary specific embodiment. Next referring to Figure 4, there are shown flows of information between parts of an electronic system in accordance with the disclosure and ancillary parts, for account creation 320. This uses: a portable electronic communications device 300, in this case a user's smartphone; a server 60 of the electronic system; and the API of an electronic transaction management system 310. The device 300 sends an initial message 321 to the server 60, with information to create an account. The server cryptographically secures (hashes) a provided password and stores this in a database. The server 60 then sends some of the account information 322 to the API 310, which provides an identifier for its system in a return message 323. A token is generated at the server 60 using the information and returned to the device 300 in message 324. More information for the account 325 is provided from the device 300 to the server 60 and this is communicated 326 on to the API 310, which returns a transaction management system token 327 to the server 60. A return message 328 from the server 60, returns the token to the device 300. The device 300 then confirms the token 329 to the server 60, which sends it 330 to the API 310. The confirmed token is returned 331 from the API 310 to the server 60, which then returns it 332 to the device 300. The account creation process 320 is then complete.

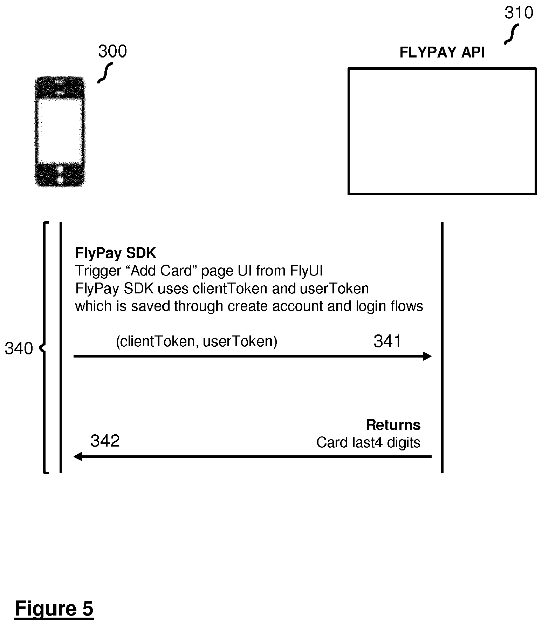

Now with reference to Figure 5, there are shown flows of information between parts ancillary to an electronic system in accordance with the disclosure, for account configuration 340, specifically to add payment details to the electronic transaction management system 310 from the device 300. The details with the user's token are sent 341 directly from the device 300 to the API 310 and the API returns confirmation 342. The account configuration process 340 is then complete.

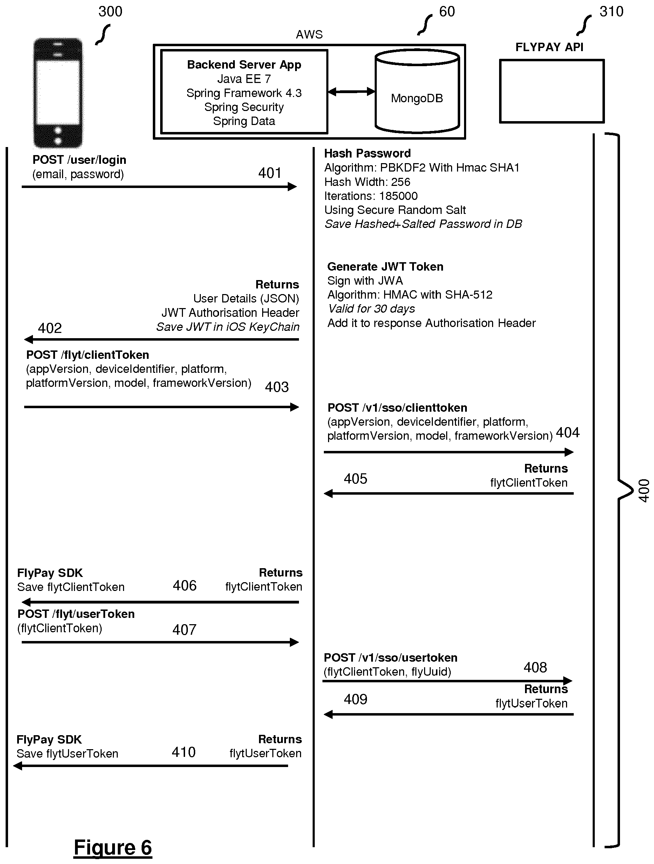

Referring next to Figure 6, there are shown flows of information between parts of an electronic system in accordance with the disclosure and ancillary parts, for account login 400. These steps may precede normal use of the electronic system, for example as described with reference to Figure 3. The device 300 provides a login request 401 to the server 60. A password received in the login request 401 is cryptographically secured (hashed) and a token generated, which is sent 402 back to the device 300. The device 300 then communicates 403 the token with device-specific information to the server 60 and the server 60 sends 404 the received token to the API 310. A client token for the API 301 is returned 405 to the server 60, which returns it 406 to the device 300. The device confirms the token 407 to the server 60, which then sends it with the user's identifier for the electronic transaction management system to the API 310. This is returned 409 from the API 310 to the server 60, which returns it 410 to the device 300. The account login process 400 is then complete.

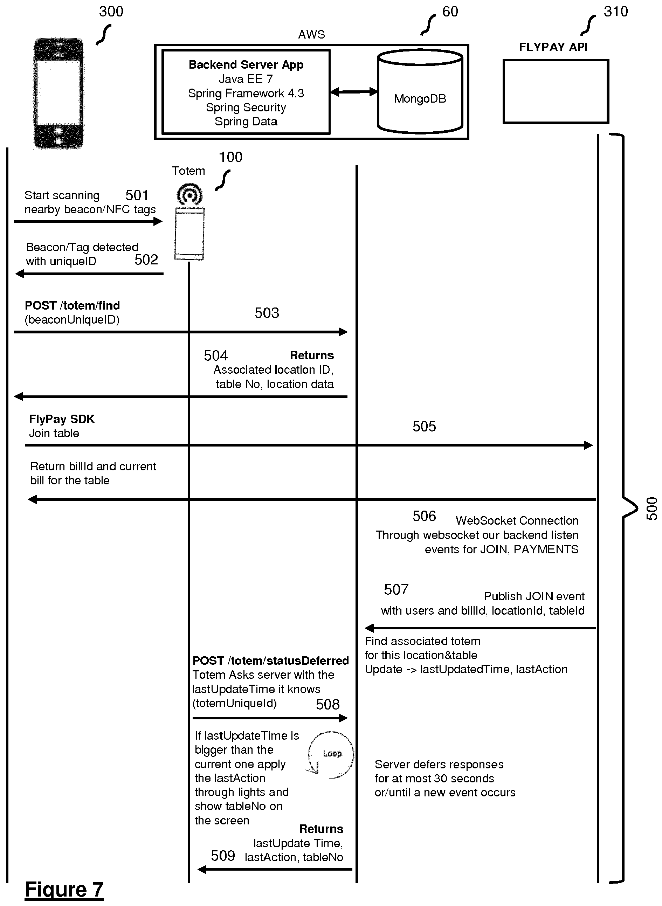

With reference to Figure 7, there are then shown flows of information between parts of an electronic system in accordance with the disclosure and ancillary parts, for registering a transaction 500 at a location. This process is in accordance with normal use of the electronic system, for example as described with reference to Figure 3.

The device 300 scans 501 for a nearby beacon or NFC tag from a totem 100. A unique location identification code is transmitted 502 by the totem 100 and received by the device 300. The device 300 sends 503 the received unique location identification code to the server 60. The server 60 returns 504, a location identifier associated with the unique location identification code.

The device 300 can then send a request 505 to the API 310 to register an order being processed (or to be processed) by the electronic transaction management system at the location. Information about that order is returned 506 from the API 310 to the device 300 in response. The API 310 also communicates 507 to the server 60, to indicate that the device 300 has registered itself in relation to the location identifier. This change in status is stored at the server 60 (a database in communication with the server 60) in relation to an identifier associated with the totem 100.

The totem 100 requests 508 the status of the totem from the server 60, using a technique called "long-pooling". The totem 100 sends this request 508 to the server immediately after it receives any last response from the server 60. The server 60 does not respond immediately and waits for a new event to occur in relation to the identifier associated with that totem 100. Whenever a new event occurs in relation to the identifier associated with that totem 100 or a predetermined total wait time has elapsed (for example, 10 seconds), the server 60 returns 509 the current status of the totem. When the change in status due to registration at the location has been stored, this is thereby communicated to the totem 100 using the return 509. The totem 100 may then activate its visual indicator 130 to indicate registration, as described above. The transaction registration process 500 is then complete.

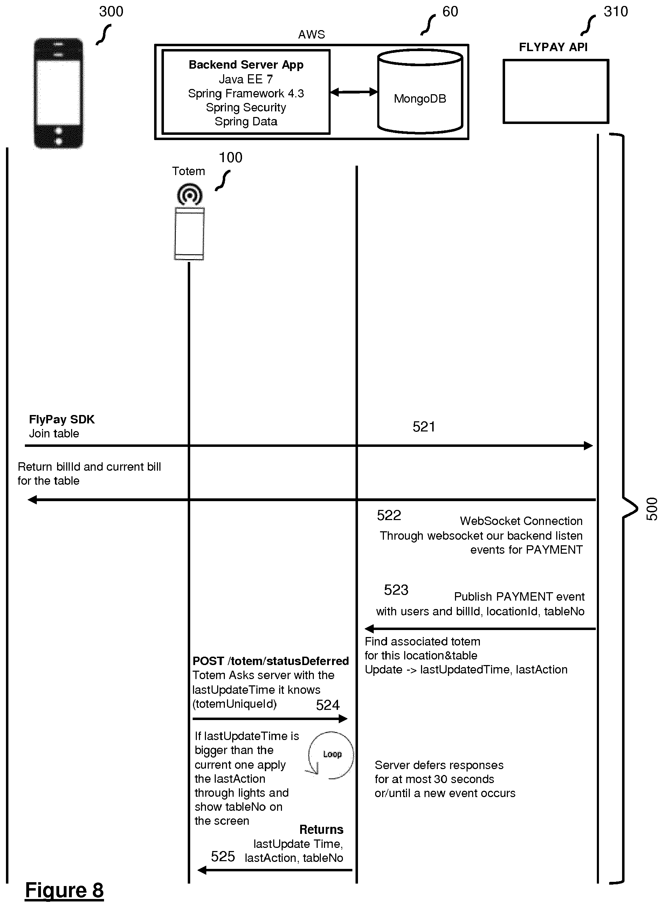

Referring now to Figure 8, there are shown flows of information between parts of an electronic system in accordance with the disclosure and ancillary parts, for completing a transaction 520 at the location. This is started by the device 300 sending a completion message 521 to the API 310. The API 310 then effects the requested payment and communicates 522 the change in status for the transaction to the device 300. In some cases, the payment will cause completion of the transaction. Then, the API 310 sends 523 an indication of the completion to the server 523. As with reference to Figure 7, the totem 100 requests 524 the status of the totem from the server 60 (sent to the server immediately after it receives any last response from the server 60). When a new event occurs in relation to the identifier associated with the totem 100 or a predetermined total wait time has elapsed, the server 60 returns 525 the current status of the totem. When the change in status due to transaction completion at the location has been stored, this is thereby communicated to the totem 100 using the return 525. The totem 100 may then activate its visual indicator 130 to indicate completion, as described above. The transaction completion process 520 is then complete.

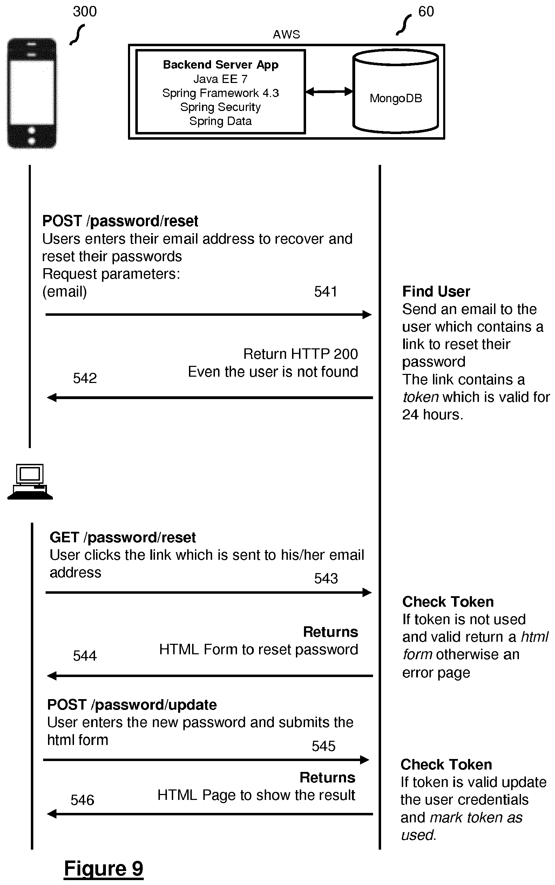

Finally referring to Figure 9, there are shown flows of information between parts ancillary to an electronic system in accordance with the disclosure, for account recovery 540 (for example when the user has forgotten the password associated with the account). The device 300 sends a password reset message 541 to the server 60, indication an identifier for the user's account. A return message 542 is sent back to the device 300. This triggers an Internet link to be sent, for example to an email address associated with the account. The device 300 (or another device) uses 543 the received Internet link to communicate with the server 60, which returns 544 a form for password retrieval. The user sends back 545 requested information and the server 60 confirms 546 any update. The account recovery process 540 is then complete.

All of the communication is advantageously secured using a cryptographic protocol called SSL that provides end-to-end encryption and integrity for all web requests. Other security for end-to-end encryption, message integrity and/or originator integrity can be used. Moreover, 'man-in-the-middle' attacks, which allow an attacker to bypass the SSUTLS certificate used (for instance for communication between the server 60 and the totem 100), are prevented using a technique called Certificate-Pinning. The information provided by the server 60 to the totem 100 will have no meaning to a third party.

Although a specific embodiment has now been described, the skilled person will appreciate that various modifications and alternations are possible. The skilled person will appreciate that the electronic system of the disclosure need not necessarily be applied to a restaurant scenario. It can be effective in other scenarios in which a location-specific transaction is made, for instance when an order is made for goods or services and those goods or services are delivered to a user when they are at a specific location, such as in a store of a 'catalogue merchant'.

One variant to the system described herein may involve the completion of the transaction being effect without the need for the user to send a completion message 521 to the API 310. In some embodiments, the electronic transaction management system may effect completion automatically without the need for the device 300 to start the process. For instance, this may be based on time, the location of the device 300 and/or a change in the location of the device 300.

In an implementation, the visual indicator of the interaction device may additionally or alternatively comprise a display screen (for example, an LCD display). The display screen on the interaction device may provide an indication of the table number. This information may be indicated in the return 509 or return 525, for example. Other indications might be provided using the display screen when the steps for registration at the location are completed (for instance after the sixth communications step 250 of Figure 3) and/or when the transaction is completed (for example after the final communications step 270 of Figure 3).

The skilled person will also consider that the visual indicator 130 (particularly in the form of a light) may be activated in the first colour from after the sixth communications step 250 of Figure 3 and remain active in the first colour until after the final communications step 270 of Figure 3, at which point it changes to the second colour and remains active in the second colour for a predetermined period of time (for example, as discussed above). This may be less energy efficient than other implementations, however.

All of the features disclosed herein may be combined in any combination, except combinations where at least some of such features and/or steps are mutually exclusive. In particular, the preferred features of the invention are applicable to all aspects of the invention and may be used in any combination. Likewise, features described in non-essential combinations may be used separately (not in combination).

## Claims

1. A method for facilitating a location-specific transaction using an electronic system, the electronic system comprising: a server; and an interaction device positioned at a location separate from the server, the method comprising:
communicating a location identification code from a short-range communications interface of the interaction device to a portable electronic communications device of a user proximate to the location;
in response to receiving the location identification code from the interaction device, communicating the location identification code from the portable electronic communications device of the user to the server of the electronic system;
identifying a location identifier corresponding with the location identification code from the server to the portable electronic communications device of the user, so that the portable electronic communications device of the user can send the location identifier to an electronic transaction management system, in order to manage the transaction being effected at the location;
receiving at the server, upon a completion of the transaction, an electronic signal indicating the completion and in response to receiving the signal, communicating a completion instruction from the server to the interaction device, using a long-range communications interface of the interaction device that is separate from the short-range communications interface; and
in response to receiving the completion instruction, activating a visual indicator at the interaction device, to indicate the completion of the transaction.

2. The method of claim 1, wherein the short-range communications interface of the interaction device is configured to communicate no more than 0.5 metres from the interaction device.

3. The method of claim 1 or claim 2, wherein the short-range communications interface comprises one of: a Bluetooth Low Energy interface; and a Near Field Communications interface.

4. The method of any preceding claim, wherein the long-range communications interface comprises one of: a wireless local area network interface; and a cellular network interface.

5. The method of any preceding claim, wherein the visual indicator comprises a light.

6. The method of any preceding claim, further comprising:
receiving at the server, an electronic indication that the electronic transaction management system has registered the portable electronic communications device of the user at the location and in response to receiving the electronic indication, communicating a registration instruction from the server to the interaction device, using a long-range communications interface of the interaction device; and
in response to receiving the registration instruction, activating a visual indicator at the interaction device, to indicate the registration.

7. The method of claim 6, wherein the visual indicator indicates the registration using a light of a first colour and indicates the completion of the transaction using a light of a second, different colour.

8. The method of claim 6 or claim 7, wherein the visual indicator indicates the registration using a light activated for a first duration and indicates the completion of the transaction using a light activated for a second, different duration.

9. The method of claim 8, wherein the second duration is longer than the first duration.

10. The method of any preceding claim, further comprising:
sending a registration request from the portable electronic communications device of the user to the electronic transaction management system, the registration request indicating the location identifier and a unique identifier for the portable electronic communications device of the user.

11. The method of any preceding claim, further comprising:
registering the portable electronic communications device of the user with the server of the electronic system, to provide a unique identifier for the portable electronic communications device of the user.

12. The method of any preceding claim, further comprising:
communicating an indication from the portable electronic communications device of the user to the electronic transaction management system to effect completion of the transaction.

13. The method of any preceding claim, further comprising:
configuring the server with the location identifier that corresponds with the location identification code communicated by the interaction device, using a communications device remote from the server.

14. The method of any preceding claim, wherein the system comprises a plurality of interaction devices, each interaction device being positioned at a different location and each comprising: a respective short-range communications interface configured for communicating a respective, unique location identification code; a respective long-range communications interface; and a respective visual indicator, configured to be activated in response to an instruction received from the server via the long-range communications interface.

15. An electronic system for facilitating a location-specific transaction, comprising:
an interaction device, positioned at a location and comprising: a short-range communications interface, configured to communicate a location identification code to a portable electronic communications device of a user proximate to the location; a long-range communications interface that is separate from the short-range communications interface; and a visual indicator;
a server, separate from the interaction device and configured to: receive the location identification code from the portable electronic communications device of the user; identify a location identifier corresponding with the location identification code to the portable electronic communications device of the user, so that the portable electronic communications device of the user can send the location identifier to an electronic transaction management system, in order to manage the transaction being effected at the location; and receive, upon a completion of the transaction, an electronic signal indicating the completion and in response to receiving the signal, communicate a completion instruction from the server to the interaction device, using the long-range communications interface of the interaction device; and
wherein the interaction device is further configured to, in response to receiving the completion instruction, activate the visual indicator, to indicate the completion of the transaction.

## Amended claims

### Amended claims in accordance with Rule 137(2) EPC.

1. A method for facilitating a location-specific transaction using an electronic system, the electronic system comprising: a server (60); and an interaction device (100) positioned at a location separate from the server, the method comprising:
communicating (200) a location identification code from a short-range communications interface (110) of the interaction device to a portable electronic communications device (300) of a user proximate to the location;
in response to receiving the location identification code from the interaction device, communicating (210) the location identification code from the portable electronic communications device of the user to the server of the electronic system;
identifying (220) a location identifier corresponding with the location identification code from the server to the portable electronic communications device of the user, so that the portable electronic communications device of the user can send the location identifier to an electronic transaction management system, in order to manage the transaction being effected at the location, the electronic transaction management system comprising a point of sale system (50), distinct from the electronic system;
receiving at the server, upon a completion of the transaction, an electronic signal indicating the completion and in response to receiving the signal, communicating (270) a completion instruction from the server to the interaction device, using a long-range communications interface (120) of the interaction device that is separate from the short-range communications interface; and
in response to receiving the completion instruction, activating a visual indicator (130) at the interaction device, to indicate the completion of the transaction.

2. The method of claim 1, wherein the short-range communications interface (110) of the interaction device (100) is configured to communicate no more than 0.5 metres from the interaction device.

3. The method of claim 1 or claim 2, wherein the short-range communications interface (110) comprises one of: a Bluetooth Low Energy interface; and a Near Field Communications interface.

4. The method of any preceding claim, wherein the long-range communications interface (120) comprises one of: a wireless local area network interface; and a cellular network interface.

5. The method of any preceding claim, wherein the visual indicator (130) comprises a light.

6. The method of any preceding claim, further comprising:
Receiving (240) at the server (60), an electronic indication that the electronic transaction management system (50) has registered the portable electronic communications device (300) of the user at the location and in response to receiving the electronic indication, communicating (250) a registration instruction from the server to the interaction device (100), using the long-range communications interface (120) of the interaction device; and
in response to receiving the registration instruction, activating the visual indicator (130) at the interaction device, to indicate the registration.

7. The method of claim 6, wherein the visual indicator (130) indicates the registration using a light of a first colour and indicates the completion of the transaction using a light of a second, different colour.

8. The method of claim 6 or claim 7, wherein the visual indicator (130) indicates the registration using a light activated for a first duration and indicates the completion of the transaction using a light activated for a second, different duration.

9. The method of claim 8, wherein the second duration is longer than the first duration.

10. The method of any preceding claim, further comprising:
Sending (230) a registration request from the portable electronic communications device (300) of the user to the electronic transaction management system (50), the registration request indicating the location identifier and a unique identifier for the portable electronic communications device of the user.

11. The method of any preceding claim, further comprising:
Registering (320) the portable electronic communications device of the user with the server of the electronic system, to provide a unique identifier for the portable electronic communications device of the user.

12. The method of any preceding claim, further comprising:
Communicating (521) an indication from the portable electronic communications device (300) of the user to the electronic transaction management system (50) to effect completion of the transaction.

13. The method of any preceding claim, further comprising:
configuring the server with the location identifier that corresponds with the location identification code communicated by the interaction device, using a communications device remote from the server.

14. The method of any preceding claim, wherein the system comprises a plurality of interaction devices (100), each interaction device being positioned at a different location and each comprising: a respective short-range communications interface (110) configured for communicating a respective, unique location identification code; a respective long-range communications interface (120); and a respective visual indicator (130), configured to be activated in response to an instruction received from the server (60) via the long-range communications interface.

15. An electronic system for facilitating a location-specific transaction, comprising:
an interaction device (100), positioned at a location and comprising: a short-range communications interface (110), configured to communicate a location identification code to a portable electronic communications device (300) of a user proximate to the location; a long-range communications interface (120) that is separate from the short-range communications interface; and a visual indicator (130);
a server (60), separate from the interaction device and configured to: receive (200) the location identification code from the portable electronic communications device of the user; identify (220) a location identifier corresponding with the location identification code to the portable electronic communications device of the user, so that the portable electronic communications device of the user can send the location identifier to an electronic transaction management system, in order to manage the transaction being effected at the location, the electronic transaction management system comprising a point of sale system (50), distinct from the electronic system; and receive, upon a completion of the transaction, an electronic signal indicating the completion and in response to receiving the signal, communicate (270) a completion instruction from the server to the interaction device, using the long-range communications interface of the interaction device; and
wherein the interaction device is further configured to, in response to receiving the completion instruction, activate the visual indicator (130), to indicate the completion of the transaction.
